# EUROPÄISCHE PATENTSCHRIFT

(11) **EP 0 963 807 B1**
(45) Veröffentlichungstag und Bekanntmachung des Hinweises auf die Patenterteilung: **12.11.2003**
(21) Anmeldenummer: 99109413.7
(22) Anmeldetag: 11.05.1999
(51) Int. Cl.: B23K 31/02

(54) **Rahmen eines Arbeitsgeräts**
Tool support
Support d' outil

(30) Priorität: 12.06.1998 US 97291
(43) Veröffentlichungstag der Anmeldung: 15.12.1999
(73) Patentinhaber: DEERE & COMPANY, Moline, Illinois 61265-8098 (US)
(72) Erfinder: Noonan, James Thomas, Johnston, IA 50131 (US); Payne, David Alan, Urbandale, IA 50322 (US); Mosdal, Brian Thomas, Ankeny, IA 50021 (US); Parker, Paul David, Ankeny, IA 50021 (US)
(74) Vertreter: Magin, Ludwig Bernhard

(56) Entgegenhaltungen:
- DE-A- 2 740 510
- GB-A- 2 260 508
- GB-A- 2 277 289
- US-A- 5 190 207

## Beschreibung

Die Erfindung betrifft einen Rahmen eines Arbeitsgeräts, mit einem ersten Rohrbauteil, das eine erste Seitenwand und eine zweite Seitenwand aufweist, und mit einem zweiten Rohrbauteil.

Rahmen für Arbeitsgeräte wie Feldkultivatoren oder Zinkengrubber werden in der Regel durch Zusammenschweißen einer Reihe ähnlicher Rohre hergestellt. Bei einigen Herstellungsverfahren, wie zum Beispiel in der US 5 190 207 gezeigt, wird das Ende eines Rohrs mit einem Laser geschnitten, um es der Form des Rohrs, an dem es befestigt wird, anzupassen. Der Schnitt stellt eine feste Verbindung bereit, indem ein Teil des abgeschnittenen Rohres um den Radius des Rohrs, an dem es zu befestigen ist, gewickelt wird; und es wird eine verkürzte Schweißzeit erreicht. Die Verbindung ist jedoch teuer im Vergleich mit einer geraden Verbindung. Gerade abgeschnittene Verbindungen erfordern gelegentlich während des Schweißvorganges Füllstäbe und sind oft nicht in der Lage, die Verbindungsfestigkeit und Brauchbarkeit bereitzustellen, die für die sich während des Arbeitens auf einem Feld ergebende schwere Belastung des Arbeitsgeräts notwendig ist. Die Rahmenabschnitte werden häufig aus vielen kurzen Rohren zusammengefügt, wobei die Stärke der Verbindung auf der Schweißung beruht. Wenn eine Schweißung nicht sauber hergestellt ist, kann der Rahmen versagen. Außerdem erfordern Farbgebungsvorgänge Abflußlöcher in den geschweißten Rohrbauteilen, die zusätzliche Schritte zum Fertigungsprozeß hinzufügen. Viele Verstärkungseckbleche sind in der Regel nötig, die zusätzliche Schweißschritte erfordern sowie Farbansammlungen und Tropfenprobleme bei Farbgebungsvorgängen bedingen.

Bei einigen landwirtschaftlichen Rahmenkonstruktionen wird das Ende des Rohrs an die Seite eines anderen Rohres mit größeren Abmessungen geschweißt (das bedeutet, daß z.B. ein Rohr von 10 x 10 cm an die 12,5 cm breite Seite eines Rohres von 5 x 12,5 cm geschweißt wird). Während diese Verbindung mit einer einfachen Kehlnaht hergestellt werden kann, ist die größere Wand einer Verbiegung ("Oil Canning") durch die Belastung des daran angeschweißten Rohres ausgesetzt. Das angesetzte Rohr ist nur durch eine Schweißverbindung an der größeren Wand angebracht, und die Wand kann sich unter den schweren Knickund Torsionslasten, die sie im Feld erfährt, biegen. Diese Verbiegung reduziert die Lebensdauer der Verbindung. Wenn Scharnierbügel oder dergleichen angebracht werden, kann der den Bügel haltende Bolzen die Wand des halternden Rohres zusammendrücken. Das Aufrechterhalten des Drehmoments des Bolzens wird als Folge des Zusammendrückens der Wand schwierig.

Das Konstruieren eines Rahmens umfaßt häufig das Klemmen oder Anschrauben von ankuppelbaren Unter-Rahmen an einen Hauptrahmen. Die Unter-Rahmen übertragen Zugkräfte vom ziehenden Fahrzeug auf die quer verlaufenden Bauteile des Hauptrahmens, sind aber schwer herzustellen, zu versenden und zusammenzusetzen. Die kuppelbare Unterrahmenkonstruktion erfordert häufig teure Verbindungspunkte am Hauptrahmen. Wie bei jeder geschraubten oder geklemmten Anordnung ist die strukturelle Festigkeit und die Zuglastübertragung auf die Querelemente manchmal beeinträchtigt. Ein weiteres Problem bei einer derartigen Anordnung ist, daß sich der Unter-Rahmen nicht bis zur Rückseite des Geräts erstreckt; daher ist das Hinzufügen einer Kupplung schwieriger.

Um durchgehende seitliche Reihenhalterungs- oder Rohrbauelemente bereitzustellen, verwenden einige Hersteller eine Brückenstruktur, um eine Lastübertragung durch das Gerät zu unterstützen. Sich transversal erstreckende, werkzeugtragende Rohre werden zwischen oberen und unteren Rohren kleineren Querschnitts angeschweißt. Die Brückenstruktur erfordert in der Regel hohe Schweißkosten, und es werden viele kleine Schweißstellen anstelle großer durchgehender Schweißnähte verwendet. Verschweißte HV-Nähte sind nötig, die zu einer geringeren strukturellen Festigkeit als Kehlnähte tendieren. Die Verbindungen tendieren während kombinierter Biegungs- und Torsionslasten zu brechen.

Der Erfindung liegt das Problem zugrunde, eine verbesserte Rahmenkonstruktion für ein landwirtschaftliches Arbeitsgerät zu schaffen und zur Lösung der oben genannten Probleme beizutragen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Rahmen eines Arbeitsgeräts umfaßt ein erstes Rohrbauteil mit ersten und zweiten Seitenwänden. In die erste Seitenwand ist eine Öffnung eingebracht, deren Querschnitt einem zweiten Rohrbauteil entspricht, das in der Öffnung aufgenommen ist. Eine Verbindungsstruktur fixiert das erste und zweite Rohrbauteil aneinander. Dabei ist selbstverständlich die Höhe des ersten Rohrbauteils größer als die des zweiten Rohrbauteils, falls die Rohrbauteile horizontal orientiert sind. Es wird eine mechanische Verbindung bereitgestellt, die nicht nur auf der Festigkeit einer Schweißverbindung beruht. Die Festigkeit gegenüber Verbiegungen wird gegenüber bekannten Rahmenkonstruktionen ebenfalls verbessert, da die Öffnung sich verformen müßte, bevor die Verbindung völlig versagt.

In der Regel ist das erste und/oder zweite Rohrbauteil rechteckigen Querschnitts, obwohl auch ein kreisförmiger, ovaler oder anderer (z.B. dreieckiger) Querschnitt denkbar wäre.

Das zweite Rohrbauteil kann innerhalb des ersten Rohrbauteils enden. Eine zweite Öffnung im ersten Rohrbauteil erlaubt dem zweiten Rohrbauteil aber auch, durch das erste Rohrbauteil, das eine größere Höhe hat, hindurch zu verlaufen, um eine Verbiegung der Seitenwand (das sogenannte "Oil Canning") des größeren ersten Rohrbauteiles zu vermeiden oder zu vermindern. Die entstandene Verbindung hat mehr Biegungs- und Torsionswiderstand als eine stumpf geschweißte Verbindung. Die Rahmenkonstruktion ermöglicht leicht schweißbare Kehlschweißnähte an beiden Seiten des größeren, ersten Rohrbauteils und vermindert die Anzahl an Verstärkungseckblechen und die damit verbundenen Probleme. Das kleinere, zweite Rohrbauteil kann durchgehend durch die Verbindung (d.h. durch das erste Rohrbauteil) verlaufen, um die Anzahl der Komponenten und Schweißnähte einer gegebenen Rahmenkonstruktion zu vermindern. Keines der Rohrbauteile muß ausgeklinkt werden, und Zusatzstäbe sind unnötig, da die Kehlschweißnähte die Lücke zwischen dem größeren ersten Rohrbauteil und dem durchgehenden, zweiten Rohrbauteil füllen. Die zusammengefügten Komponenten selbst positionieren die Rohrbauteile des Rahmens aneinander, um das Schweißverbinden zu vereinfachen und vergrößern die Widerstandsfähigkeit gegen Parallelogrammverschiebungen.

Außerdem können Scharnierbereiche mit vergrößerter Torsionsresistenz bereitgestellt werden, indem das kleinere zweite Rohrbauteil durch das größere erste Rohrbauteil verläuft und das Scharnier an der Verbindungsstelle angebracht wird. In einer Ausführungsform ist eine Seitenwand des größeren, ersten Rohrbauteils zur Aufnahme des (vorzugsweise) transversal verlaufenden, zweiten Rohrbauteils geöffnet, und die Verbindung ist geschweißt, obwohl auch eine Löt- oder Klebverbindung denkbar wäre. Bolzen zur Befestigung des Scharniers, wie Schrauben oder Nieten, verlaufen durch die Seitenwände des ersten Rohrbauteils. Bei einer anderen Ausführungsform sind beide Seitenwände des größeren ersten Rohrbauteils geöffnet und das zweite Rohrbauteil verläuft durch das erste Rohrbauteil hindurch und ist an beiden Seiten des ersten Rohrbauteils angeschweißt, um eine verbesserte Torsionssteifigkeit und bessere Drehmomentaufnahme in der Verbindung zu erreichen. Das zweite Rohrbauteil steht dann in der Regel etwas über die äußere Seitenwand des ersten Rohrbauteils über, und das Scharnier ist mit einem Rezeß versehen, der den überstehenden Bereich des zweiten Rohrbauteils und die Schweißnaht aufnimmt.

Vorzugsweise verläuft das erste Rohrbauelement in Bewegungsrichtung des Arbeitsgeräts - insbesondere durchgehend - von vorn nach hinten. Derartige durchgehende sogenannte Kupplungs-Rohrbauteile machen Unter-Rahmen überflüssig und verteilen Kupplungskräfte eines Zugfahrzeugs auf die sich in seitlicher Richtung erstreckenden Rohre, unabhängig von geklemmten oder geschraubten Verbindungen und einer hohen Anzahl von Verstärkungseckblechen.

In der Regel ist ein Rahmen aus mehreren Rohrbauteilen zusammengesetzt, von denen eine erste Anzahl etwa rechtwinklig zu einer zweiten Anzahl verläuft. Dabei können die ersten Rohrbauteile in Bewegungsrichtung von vorn nach hinten verlaufen und die zweiten Rohrbauteile sich durch entsprechende Öffnungen in den ersten Rohrbauteilen erstrecken.

Das Arbeitsgerät kann mit Werkzeugen ausgestattet sein, die den Boden in irgendeiner Weise bearbeiten. Diese Werkzeuge werden vorzugsweise am ersten und/oder zweiten Rohrbauteil befestigt. Insbesondere verläuft das Rohrbauteil, an dem das Werkzeug befestigt ist, transversal zur Bewegungsrichtung des Arbeitsgeräts.

Weiterhin bietet sich an, den Rahmen in zwei spiegelsymmetrische Hälften aufzuteilen, um den Versand zu vereinfachen. Es bietet sich an, beide Hälften durch innen an ihnen angebrachte Endbauteile aneinander (lösbar) zu befestigen.

Sind zwei Hauptrahmenhälften mit jeweils einem durchgehenden, sich von vorn nach hinten erstreckenden ersten Rohrbauteil vorhanden, ist eine Herstellung, ein Versand und ein Zusammenbau von Unter-Rahmen entbehrlich. Da die ersten Rohrbauteile, sogenannte Kupplungsrohrbauteile von der Kupplung bis zum Ende des Arbeitsgeräts durchgehend sind, kann eine hintere Kupplungssoption hinzugefügt werden, um Zuglast von einem hinten angehängten Arbeitsgerät effizient auf die frontseitige Kupplung zu übertragen.

An der Außenseite eines Hauptrahmens, aber auch an der Innenseite eines Flügelrahmens können äußere Rohrbauteile angebracht sein, in denen Öffnungen mit darin befestigten, transversal verlaufenden Rohrbauteile vorhanden sind. Insbesondere an derartigen Rohrbauelementen können Scharniere befestigt werden, da das transversale Rohrbauteil und die Schweißverbindung die Befestigungsstelle des Scharniers verstärkt, wie weiter oben bereits beschrieben.

Schließlich ist vorgeschlagen, daß sich der Rahmen im wesentlichen zwischen zwei Ebenen erstreckt, die durch die Unter- und Oberseiten des (größeren) ersten Rohrbauteils definiert werden. Das zweite Rohrbauelement oder die zweiten Rohrbauelemente sind dann transversal zu den ersten Rohrbauelementen orientiert.

Diese und andere Merkmale und Vorteile der vorliegenden Erfindung werden in den Zeichnungen und der nachfolgenden Beschreibung offenbart und näher erläutert. Es zeigt:
- Fig. 1: eine perspektivische Frontansicht einer Hälfte eines Hauptrahmens für ein Arbeitsgerät, in dem ein Rahmenaufbau nach der vorliegenden Erfindung verwendet wird,
- Fig. 2: eine perspektivische Ansicht eines Flügelrahmens für ein Arbeitsgerät,
- Fig. 3: eine vergrößerte Ansicht einer Verbindung am Flügelrahmen der Figur 2, die den Aufbau der für die Rahmen der Figuren 1 und 2 verwendeten Verbindung illustriert,
- Fig. 4: eine vergrößerte Ansicht eines endseitigen Teils eines Rahmens eines Arbeitsgeräts, in der der Verbindungsbereich für eine Scharnierstelle gezeigt ist, und
- Fig. 5: eine Ansicht eines endseitigen Teils eines Abschnitts eines Rahmens eines Arbeitsgeräts, in dem eine andere Ausführungsform des Verbindungsbereichs einer Scharnierstelle gezeigt ist.

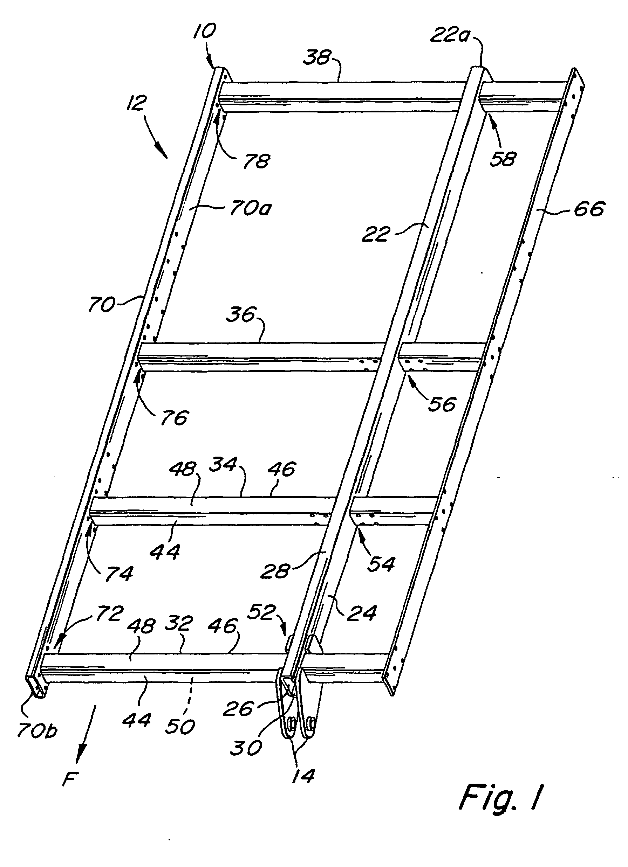

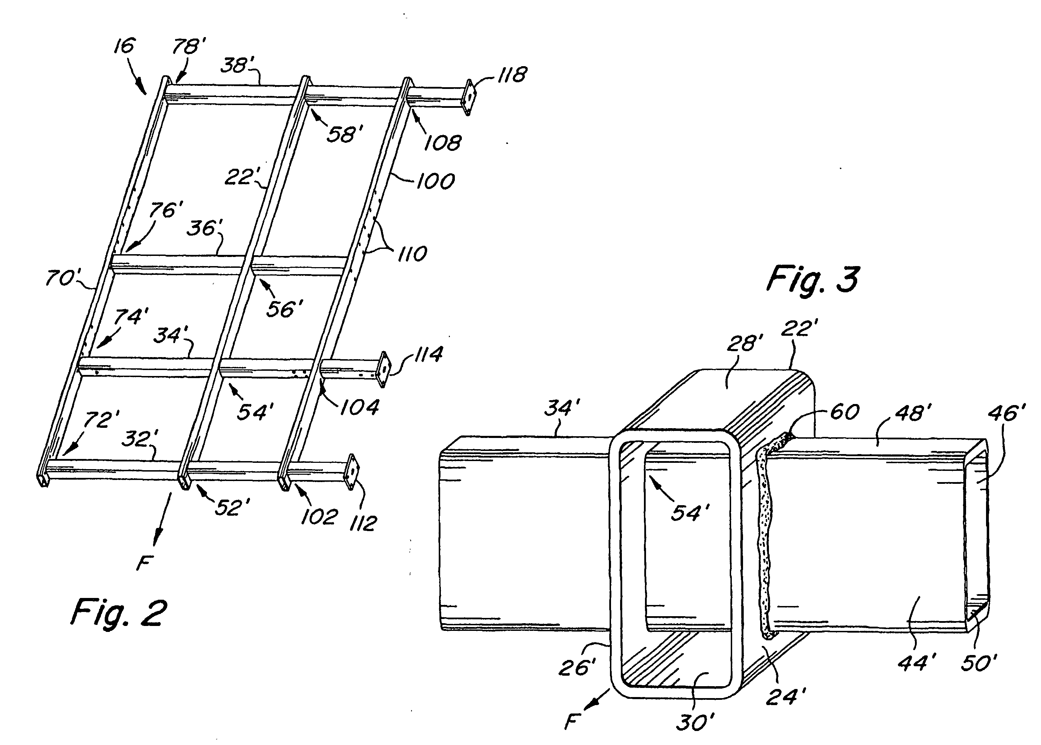

Im folgenden wird Bezug genommen auf Figur 1, in der ein Teil 10 eines Hauptrahmens 12 für ein Arbeitsgerät gezeigt ist, wie ein Zinkengrubber oder ein Feldkultivator, der eingerichtet ist, mittels eines Zugfahrzeugs und einer (nicht gezeigten) Kupplung, die mit einem vorderen Kupplungsanschluß 14 verbunden wird, in einer Vorwärtsrichtung F über den Boden gezogen zu werden. Nur der (in Fahrtrichtung F gesehen) rechte Teil 10 des Rahmens 12 ist dargestellt, da der linke Teil eine ähnliche Konstruktion mit einem Rohr innerhalb eines Rohrs aufweist und im wesentlichen ein Spiegelbild des Teils 10 ist. Ein Flügelrahmen 16 (Figur 2) ist eingerichtet, am Hauptrahmen 12 abgestützt zu werden und umfaßt eine Konstruktion mit einem Rohr innerhalb eines Rohrs, einer Art, die ähnlich der des Hauptrahmens 12 ist. In den Zeichnungen sind Teile des Flügelrahmens 16 ebenso numeriert wie entsprechende Teile des Hauptrahmens 12, unterscheiden sich jedoch durch ein Apostroph nach der Bezugszahl.

Der Hauptrahmen 12 umfaßt ein durchgehendes, sich von vorn nach hinten erstreckendes Rohrbauteil 22 (einen Hauptträger), das einen rechteckigen Querschnitt aufweist mit ersten und zweiten aufrechten Seitenwänden 24 und 26, die durch obere und untere Wände 28 und 30 verbunden sind. Das Rohrbauteil 22 hat einen im wesentlichen rechteckigen Querschnitt, wobei die Seitenwände 24 und 26 eine vorbestimmte Rohrhöhe definieren, die, wie in Figur 1 gezeigt, größer als die durch die Wände 28 und 30 definierte Breite ist. Der Kupplungsanschluß 14 ist am Hauptrahmen 12 zur Anpassung an das transversale Rohrbauteil 32 geöffnet, nimmt es in sich auf, und ist am vorderen Ende des Rohrbauteils 22 befestigt.

Der Hauptrahmen 12 umfaßt transversale Rohrbauteile 32, 34, 36 und 38 rechteckigen Querschnitts, die vordere und hintere Wände 44 und 46, sowie obere und untere Wände 48 und 50 aufweisen, von denen letztere voneinander um eine Entfernung beabstandet sind, die kleiner als der Abstand zwischen den oberen und unteren Wänden 28, 30 des sich von vorn nach hinten erstreckenden Rohrbauteils 22 ist. Beide Seitenwände 24 und 26 des Rohrbauteils 22 sind an Stellen 52, 54, 56 und 58 mit einer Öffnung versehen und nehmen die entsprechenden transversalen Rohrbauteile 32 bis 38 auf. Die Öffnungen an den Stellen 52 bis 58 sind im wesentlichen relativ zu den Seitenwänden 24, 26 vertikal zentriert und entsprechen dem Querschnitt der entsprechenden transversalen Rohrbauteile 32 bis 38, um die Herstellung des Hauptrahmens 12 mit minimalen Schweißbefestigungen zu erleichtern und mechanische Abstützung für die transversalen Rohrbauteile 32 bis 38 bereitzustellen, und ihnen das Widerstehen gegenüber Torsionsbelastungen und Biegebeanspruchungen zu erleichtern. Durchgehende Kehlnahtschweißungen 60 (Figur 3) an beiden Wänden um jede Öffnungsstelle 52 bis 58 befestigen die transversalen Rohrbauteile 32 bis 38 an den Wänden 24 und 26 des sich von vorn nach hinten erstreckenden Rohrbauteils 22.

Wie in Figur 1 dargestellt, umfaßt der Hauptrahmen 12 eine innere, sich von vorn nach hinten erstreckende Anschlußplatte 66 (ein Trägerbauteil), die an den inneren Enden der transversalen Rohrbauteile 32 bis 38 angeschweißt oder anderweitig fixiert und parallel zum sich von vorn nach hinten erstreckenden Rohrbauteil 22 orientiert ist. Die Anschlußplatte 66 ist mit Öffnungen versehen und durch Bolzen (Schrauben) an der entsprechenden (nicht gezeigten) Anschlußplatte des linken Teils des Hauptrahmens 12 befestigt. Alternativ könnte der Hauptrahmen 12 als einzelnes Schweißbauteil hergestellt sein, bei dem die transversalen Rohrbauteile 32 bis 38 durchgehend durch beide sich von vorn nach hinten erstreckenden Rohrbauteile 22 verlaufen. Die zweiteilige Konstruktion ermöglicht jedoch leichtere Handhabung und einfacheren Versand.

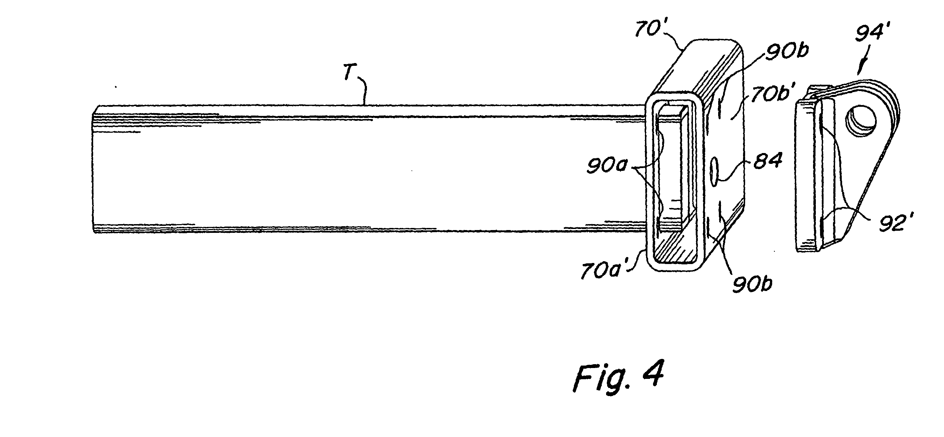

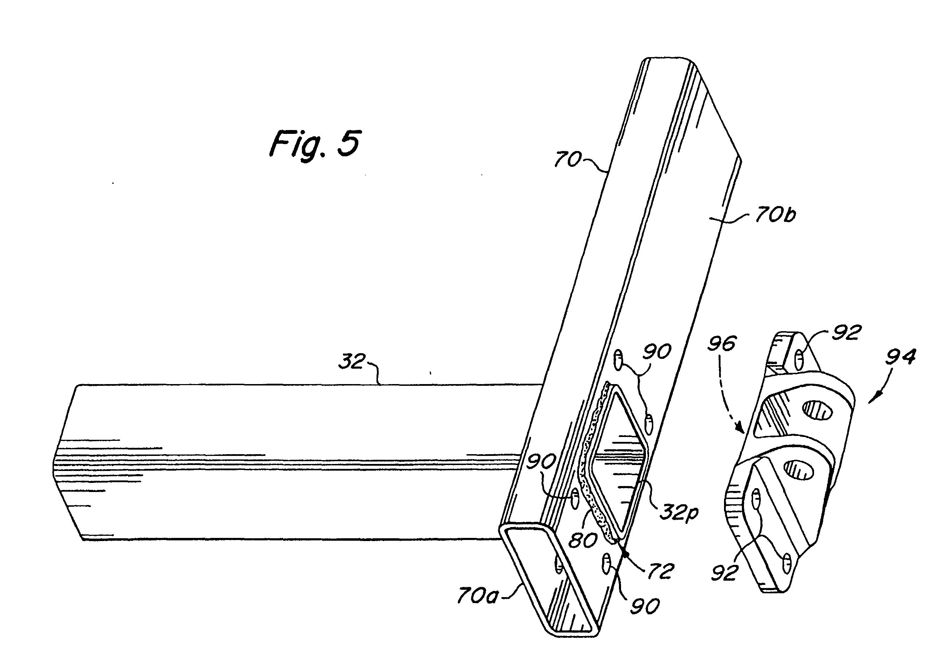

Die äußersten Enden der transversalen Rohrbauteile 32 bis 38 sind mit einem äußeren, sich von vorn nach hinten erstreckenden Rohrbauteil 70 verbunden, das im wesentlichen von derselben Höhe wie das Rohrbauteil 22 ist, aber schmaler sein kann. Das äußere Rohrbauteil 70 kann an Stellen 72, 74, 76 und 78 geöffnet sein, um die Enden der entsprechenden transversalen Rohrbauteile 32 bis 38 aufzunehmen, und um diese Stellen umlaufende Kehlschweißnähte fixieren die Rohrbauteile 32 bis 38 und 70 fest aneinander. In der in Figur 5 gezeigten Ausführungsform sind sowohl die inneren (s. 70a) als auch die äußeren Wände 70b des äußeren Rohrbauteils 70 mit einer Öffnung versehen, um den Enden der transversalen Rohrbauteile 32 bis 38 zu entsprechen und sie aufzunehmen, und das Ende jedes transversalen Rohrbauteils 32 bis 38 steht geringfügig über die äußere Wand 70b hinaus (s. 32p in Figur 5). Durchgehende Kehlschweißnähte 80 zwischen der äußeren Wand 70b und dem überstehenden Bereich 32p, sowie zwischen der inneren Wand 70a und den transversalen Rohrbauteilen 32 bis 38, fixieren die transversalen Rohrbauteile 32 bis 38 an dem äußeren Rohrbauteil 70. Alternativ ist nur die innere Wand 70a (s. Figur 4) mit einer Öffnung versehen und die transversalen Rohrbauteile 32 bis 38 (T in Figur 4) erstrecken sich durch die Öffnung und enden innerhalb des äußeren Rohrbauteils 70'. Eine durchgehende Kehlschweißnaht ist dann um die Öffnungsstelle hergestellt. Wenn das Ende des transversalen Rohrbauteils T die Innenseite des äußeren Rohrbauteils 70' berührt, kann ein Abflußloch an der Stelle 84 vorgesehen sein, um sicherzustellen, daß Farbe bei Farbgebungsvorgängen aus dem Inneren des transversalen Rohrbauteils T herauslaufen kann. Öffnungen 90a und 90b für Scharnierverbindungen sind in die Wände 70a' und 70b' nahe dem transversalen Rohrbauteil T eingebracht und Öffnungen in einem Scharniergußelement 94 fluchten mit den Öffnungen 90a und 90b. Schrauben (nicht gezeigt) werden durch die Öffnungen 90a, 90b und 94 eingesetzt und festgezogen, um das Scharniergußelement 94' an der äußeren Wand 70b' zu befestigen. Die geschweißte Wandkonstruktion versteift und stärkt die Wand 70a' und verhindert, daß sie einknickt, um das Drehmoment der Schraube aufrechtzuerhalten. Bei der Doppelschweißkonstruktion, wie sie in Figur 5 dargestellt ist, wird zusätzliche Wandfestigkeit in der Nähe der Scharnierstellen bereitgestellt. Öffnungen 90 in den Wänden 70a und 70b fluchten mit Öffnungen 92 in einem Scharniergußelement 94, das einen hohlen, mit der Bezugsziffer 96 angedeuteten Teil aufweist, um den überstehenden Bereich 32p und die Kehlschweißnaht 80 aufzunehmen. Schrauben (nicht gezeigt) werden in die Öffnungen 92,94 eingesetzt und festgezogen, um das Scharniergußelement 94 an der Wand 70b zu befestigen. Die Doppelschweißkonstruktion versteift und verstärkt die Wände 70a und 70b gegen Einknicken.

Der in Figur 2 gezeigte Flügelrahmen 16 umfaßt ein sich von vorn nach hinten erstreckendes Rohrbauteil 100, das an Stellen 102, 104 und 108 mit Öffnungen versehen ist, um transversale Rohrbauteile 32', 34' und 38' darin aufzunehmen. Kehlschweißnähte befestigen die transversalen Rohrbauteile 32', 34' und 38' an den Seitenwänden des weiteren Rohrbauteils 100. Das Ende des transversalen Rohrbauteils 36' ist an der äußeren Wand des weiteren Rohrbauteils 100 angeschweißt, und an Stellen 110 eingebrachte Öffnungen sind zum Anbringen von Rahmenstutzen bereitgestellt. Scharnierplatten 112, 114 und 118 sind an den Enden der transversalen Rohrbauteile 32', 34' und 38' angeschweißt. Wenn der Flügelrahmen 16 als innerer Abschnitt eines Geräts mit fünf Abschnitten verwendet wird, werden zusätzliche Scharniere an dem sich von vorn nach hinten erstreckenden äußeren Rohrbauteil 70' befestigt, wie in Figur 4 dargestellt. Da das transversale Rohrbauteil 32' durch das Rohrbauteil 70' und die Scharnierplatte 112 völlig verschlossen ist, sind keine Abflußlöcher im transversalen Rohrbauteil 70' notwendig. Farbe kann sich bei Farbgebungsvorgängen frei durch das sich von vorn nach hinten erstreckende Rohrbauteil 22' bewegen.

Wie dargestellt ist, sind die Rahmenabschnitte in vertikaler Richtung kompakt und liegen im wesentlichen in parallelen Ebenen, die durch die oberen und unteren Wände 28 und 30 (28' und 30') der sich von vorn nach hinten erstreckenden Rohrbauteile 22, 66, 70, 70', 100 definiert sind. Die sich von vorn nach hinten erstreckenden Rohrbauteile 22 definieren einen starkes, durchgehendes Rückgrat des Abschnitts 10 des Rahmens 12 und stellen eine exzellente Lastübertragung von den transversalen Rohrbauteilen 32, 34, 36, 38 des Hauptrahmens 12 auf den Kupplungsanschluß 14 ohne Brücke oder Unterrahmenstruktur bereit. Eine hintere Kupplung kann an den hinteren Enden (22a in Figur 1) der sich von vorn nach hinten erstreckenden Rohrbauteile 22 angebracht werden, wobei die Zugbelastungen an den hinteren Enden 22a durch die Rohrbauteile 22 effizient auf die vordere Kupplung übertragen werden.

Nachdem die bevorzugte Ausführungsform beschrieben wurde, ist erkennbar, daß unterschiedliche Abwandlungen möglich sind, ohne vom Schutzbereich der Erfindung abzuweichen, wie er in den nachfolgenden Ansprüchen definiert ist. Beispielsweise könnten die sich von vorn nach hinten erstreckenden Rohre durch Öffnungen in seitlich verlaufenden Rohren erstrecken, obwohl in der bevorzugten Ausführungsform die sich von vorn nach hinten erstreckenden Bauteile mit Öffnungen versehen sind.

## Patentansprüche

1. Rahmen (12, 16) eines Arbeitsgeräts, mit einem ersten Rohrbauteil (22, 70, 100), das eine erste Seitenwand (24, 70a) und eine zweite Seitenwand (26) aufweist, und mit einem zweiten Rohrbauteil (32, 34, 36, 38, 32, T), wobei die erste Seitenwand (24,70a) des ersten Rohrbauteils (22, 70, 100) eine Öffnung (52, 54, 56, 58, 72, 74, 76, 78) aufweist, die dem Querschnitt des zweiten Rohrbauteils (32, 34, 36, 38, T) entspricht und in der das zweite Rohrbauteil (32, 34, 36, 38, T) aufgenommen ist, und mit einer Verbindungsstruktur an der Öffnung (52, 54, 56, 58, 72, 74, 76, 78), die das erste Rohrbauteil (22, 70, 100) und das zweite Rohrbauteil (32, 34, 36, 38, T) aneinander befestigt.

2. Rahmen (12, 16) nach Anspruch 1, wobei das erste Rohrbauteil (22, 70, 100) und/oder das zweite Rohrbauteil (32, 34, 36, 38) einen rechteckigen Querschnitt aufweisen.

3. Rahmen (12, 16) nach Anspruch 1 ode 2, wobei das zweite Rohrbauteil (32, 34, 36, 38, T) innerhalb des ersten Rohrbauteils (22, 70, 100) endet.

4. Rahmen (12, 16) nach Anspruch 1 oder 2, wobei sowohl die erste Seitenwand (24, 70a) als auch die zweite Seitenwand (26, 70b) des ersten Rohrbauteils (22, 70) mit einer Öffnung (52, 54, 56, 58, 72, 74, 76, 78) versehen ist, und das zweite Rohrbauteil (32, 34, 36, 38) über das erste Rohrbauteil (22, 70) übersteht.

5. Rahmen (12, 16) nach Anspruch 4, wobei eine Verbindungsstruktur auch zwischen dem zweiten Rohrbauteil (32, 34, 36, 38) und der zweiten Seitenwand (26, 70b) des ersten Rohrbauteils (22, 70) vorgesehen ist.

6. Rahmen (12, 16) nach einem der Ansprüche 3 bis 5, wobei ein Scharnier (94) an der zweiten Seitenwand (70b) des ersten Rohrbauteils (70) angebracht und axial mit dem zweiten Rohrbauteil (32, T) ausgerichtet ist, das Scharnier (94) eine Basis mit einem Querschnitt mit Endabschnitten aufweist, die über gegenüberliegende Seiten der Öffnung (72) überstehen, und Verbinder, wie Schrauben oder Nieten, sich durch die erste Seitenwand (70a) und die zweite Seitenwand (70b) des ersten Rohrbauteils (70) und die Endabschnitte der Basis des Scharniers (94) erstrecken.

7. Rahmen (12, 16) nach einem der Ansprüche 4 bis 6, wobei das zweite Rohrbauteil (32) in einem über die zweite Seitenwand (70b) des ersten Rohrbauteils (70) hinausstehenden Endabschnitt endet, und ein mit einem Rezeß versehener Teil eines Scharniers (94) oberhalb des Endabschnitts befestigt ist.

8. Rahmen (12, 16) nach einem der vorhergehenden Ansprüche, wobei das erste Rohrbauteil (22) sich von vorn nach hinten erstreckt und Kraft auf eine oder von einer Kupplung (14) überträgt.

9. Rahmen (12, 16) nach einem der vorhergehenden Ansprüche, mit einem Paar seitlich beabstandeter, sich von vorn nach hinten erstreckender erster Rohrbauteile (22, 70, 100) mit einem ersten Satz von transversal orientierten Öffnungen (52, 54, 56, 58) und einem zweiten Satz von transversal orientierten Öffnungen (72, 74, 76, 78) und mit zwei zweiten Rohrbauteilen (32, 34, 36, 38), wobei sich eines der zweiten Rohrbauteile (32, 34, 36, 38) durch den ersten Satz von Öffnungen erstreckt und das andere der zweiten Rohrbauteile (32, 34, 36, 38) durch einen zweiten Satz von Öffnungen erstreckt.

10. Rahmen (12, 16) nach einem der vorhergehenden Ansprüche, wobei die Verbindungsstruktur zwischen dem ersten Rohrbauteil (22, 70, 100) und dem zweiten Rohrbauteil (32, 34, 36, 38, T) eine Schweißverbindung, insbesondere eine Kehlschweißnaht (60, 80) umfaßt.

11. Rahmen (12, 16) nach einem der vorhergehenden Ansprüche, wobei das Arbeitsgerät den Boden bearbeitende Werkzeuge aufweist und eingerichtet ist, in eine Vorwärtsrichtung über den Boden gezogen zu werden.

12. Rahmen (12, 16) nach Anspruch 11, wobei die Werkzeuge am ersten Rohrbauteil (22, 70, 100) und/oder zweiten Rohrbauteil (32, 34, 36, 38, T) angebracht sind.

13. Rahmen (12, 16) nach Anspruch 12, wobei das Rohrbauteil (32, 34, 36, 38, T), an dem das Werkzeug angebracht ist, transversal zur Vorwärtsrichtung verläuft.

14. Rahmen (12) nach einem der vorhergehenden Ansprüche, der getrennte linke und rechte Teile (10) umfaßt, wobei jeder Teil einen am weitesten nach innen angebrachtes, sich vorzugsweise in Vorwärtsrichtung erstreckendes Endbauteil (66) aufweist und die Endbauteile (66) miteinander zur Herstellung eines Hauptrahmens verbunden sind.

15. Rahmen (12) nach Anspruch 14, wobei der linke und rechte Teil (10) des Rahmens (12) im wesentlichen spiegelbildlich zueinander sind.

16. Rahmen (12, 16) nach einem der vorhergehenden Ansprüche, mit einem äußeren Rohrbauteil (70), in dessen nach innen gewandter Seitenwand (70a) eine Öffnung (72, 74, 76, 78) vorhanden ist zur Aufnahme der äußeren Enden transversal verlaufender Rohrbauteile (32, 34, 36, 38, T).

17. Rahmen (12, 16) nach einem der Ansprüche 6 bis 16, wobei das Scharnier (94) an der nach außen gewandten Seitenwand (70b) des ersten Rohrbauelements (70) in der Nähe eines äußeren Endes eines transversal verlaufenden zweiten Rohrbauelements (32, T) angebracht ist, das an der inneren Seitenwand (70a) des ersten Rohrbauelements (70) insbesondere durch Schweißen befestigt ist, so daß diese Befestigung der inneren Seitenwand (70a) an der Scharnierbefestigung Knickfestigkeit verleiht.

18. Rahmen (12, 16) nach einem der vorhergehenden Ansprüche, wobei das erste Rohrbauelement (22, 70, 100) untere und obere Oberflächen umfaßt, die im wesentlichen in parallelen, vertikal zueinander versetzten Ebenen verlaufen, und das vorzugsweise rechtwinklig dazu orientierte zweite Rohrbauelement (32, 34, 36, 38) im wesentlichen zwischen den versetzten Ebenen verläuft und eine kompakte Rahmenkonstruktion bildet.

## Claims

1. A frame (12, 16) of an implement, with a first tubular component (22, 70, 100) having a first sidewall (24, 70a) and a second sidewall (26), and with a second tubular component (32, 34, 36, 38, T), wherein the first sidewall (24, 70a) of the first tubular component (22, 70, 100) has an opening (52, 54, 56, 58, 72, 74, 76, 78) which corresponds to the cross-section of the second tubular component (32, 34, 36, 38, T) and in which the second tubular component (32, 34, 36, 38, T) is received, and with a connecting structure at the opening (52, 54, 56, 58, 72, 74, 76, 78), which fixes the first tubular component (22, 70, 100) and the second tubular component (32, 34, 36, 38, T) together.

2. A frame (12, 16) according to claim 1, wherein the first tubular component (22, 70, 100) and/or the second tubular component (32, 34, 36, 38) have a rectangular cross-section.

3. A frame (12, 16) according to claim 1 or 2, wherein the second tubular component (32, 34, 36, 38, T) terminates within the first tubular component (22, 70, 100).

4. A frame (12, 16) according to claim 1 or 2, wherein both the first sidewall (24, 70a) and the second sidewall (26, 70b) of the first tubular component (22, 70) are provided with an opening (52, 54, 56, 58, 72, 74, 76, 78) and the second tubular component (32, 34, 36, 38) projects beyond the first tubular component (22, 70).

5. A frame (12, 16) according to claim 4, wherein a connecting structure is also provided between the second tubular component (32, 34, 36, 38) and the second sidewall (26, 70b) of the first tubular component (22, 70).

6. A frame (12, 16) according to any of claims 3 to 5, wherein a hinge (94) is fitted on the second sidewall (70b) of the first tubular component (70) and is aligned axially with the second tubular component (32, T), the hinge (94) has a base with a cross-section with end sections which project beyond opposite sides of the opening (72) and connectors, such as screws or rivets, extend through the first sidewall (70a) and the second sidewall (70b) of the first tubular component (70) and the end sections of the base of the hinge (94).

7. A frame (12, 16) according to any of claims 4 to 6, wherein the second tubular component (32) terminates in an end section projecting beyond the second sidewall (70b) of the first tubular component (70) and a part of a hinge (94) provided with a recess is fixed over the end section.

8. A frame (12, 16) according to any of the preceding claims, wherein the first tubular component (22) extends from the front to the rear and transfers force to or from a coupling (14).

9. A frame (12, 16) according to any of the preceding claims, with a pair of laterally spaced first tubular components (22, 70, 100) extending from the front to the rear, with a first set of transversely oriented openings (52, 54, 56, 58) and a second set of transversely orientated openings (72, 74, 76, 78) and with two second tubular components (32, 34, 36, 38), wherein one of the second tubular components (32, 34, 36, 38) extends through the first set of openings and the other of the second tubular components (32, 34, 36, 38) extends through a second set of openings.

10. A frame (12, 16) according to any of the preceding claims, wherein the connecting structure between the first tubular component (22, 70, 100) and the second tubular component (32, 34, 36, 38, T) comprises a welded connection, especially a fillet weld (60, 80).

11. A frame (12, 16) according to any of the preceding claims, wherein the implement has ground working tools and is arranged to be towed over the ground in a forwards direction.

12. A frame (12, 16) according to claim 11, wherein the tools are fitted on the first tubular component (22, 70, 100) and/or second tubular component (32, 34, 36, 38, T).

13. A frame (12, 16) according to claim 12, wherein the tubular component (32, 34, 36, 38, T) on which the tool is fitted runs transverse to the forwards direction.

14. A frame (12) according to any of the preceding claims, which comprises separate left and right parts, wherein each part has an end component (66) fitted the farthest inwards and preferably extending in the forwards direction and the end components (66) are connected together to form a main frame.

15. A frame (12) according to claim 14, wherein the left and right parts (10) of the frame (12) are substantially mirror images of one another.

16. A frame (12, 16) according to any of the preceding claims, with an outer tubular part (70) in whose inwardly facing sidewall (70a) there is an opening (72, 74, 76, 78) for receiving the outer ends of transversely extending tubular components (32, 34, 36, 38, T).

17. A frame (12, 16) according to any of claims 6 to 16, wherein the hinge (94) is fitted on the outwardly facing sidewall (70b) of the first tubular component (70) in the vicinity of an outer end of a transversely extending second tubular component (32, T), which is fixed on the inner sidewall (70a) of the first tubular component (70), especially by welding, so that this fixing of the inner sidewall (70a) on the hinge fixing imparts bending stiffness.

18. A frame (12, 16) according to any of the preceding claims, wherein the first tubular component (22, 70, 100) has lower and upper surfaces which run essentially in parallel planes offset vertically from one another and the second tubular component (32, 34, 36, 38) preferably orientated at right angles thereto runs essentially between the offset planes and forms a compact frame construction.

## Revendications

1. Support (12, 16) d'un outil de travail, comprenant un premier élément tubulaire (22, 70, 100) présentant une première paroi latérale (24, 70a) et une deuxième paroi latérale (26), et comprenant un deuxième élément tubulaire (32, 34, 36, 38, T), la première paroi latérale (24, 70a) du premier élément tubulaire (2, 70, 100) présentant une ouverture (52, 54, 56, 58, 72, 74, 76, 78) correspondant à la section transversale du deuxième élément tubulaire (32, 34, 36, 38, T) et dans laquelle est logé le deuxième élément tubulaire (32, 34, 36, 38, T), et comprenant une structure d'assemblage au niveau de l'ouverture (52, 54, 56, 58, 72, 74, 76, 78) qui fixe l'un à l'autre le premier élément tubulaire (22, 70, 100) et le deuxième élément tubulaire (32, 34, 36, 38, T).

2. Support (12, 16) selon la revendication 1, dans lequel le premier élément tubulaire (22, 70, 100) et/ou le deuxième élément tubulaire (32, 34, 36, 38) présentant une section transversale rectangulaire.

3. Support (12, 16) selon la revendication 1 ou 2, dans lequel le deuxième élément tubulaire (32, 34, 36, 38, T) se termine dans le premier élément tubulaire (22, 70, 100).

4. Support (12, 16) selon la revendication 1 ou 2, dans lequel aussi bien la première paroi latérale (24, 70a) que la deuxième paroi latérale (26, 70b) du premier élément tubulaire (22, 70) est munies d'une ouverture (52, 54, 56, 58, 72, 74, 76, 78), et le deuxième élément tubulaire (32, 34, 36, 38) fait saillie du premier élément tubulaire (22, 70).

5. Support (12, 16) selon la revendication 4, dans lequel une structure d'assemblage est également prévue entre le deuxième élément tubulaire (32, 34, 36, 38) et la deuxième paroi latérale (26, 70b) du premier élément tubulaire (22, 70).

6. Support (12, 16) selon l'une des revendications 3 à 5, dans lequel une charnière (94) est disposée sur la deuxième paroi latérale (70b) du premier élément tubulaire (70) et alignée axialement au deuxième élément tubulaire (32, T), la charnière (94) présente une base d'une section transversale avec des portions d'extrémité saillant de faces opposées de l'ouverture (72), et des éléments d'assemblage tels que des vis ou des rivets s'étendent à travers la première paroi latérale (70a) et la deuxième paroi latérale (70b) du premier élément tubulaire (70) et les portions d'extrémité de la base de la charnière (94).

7. Support (12, 16) selon l'une des revendications 4 à 6, dans lequel le deuxième élément tubulaire (32) se termine dans une portion d'extrémité faisant saillie de la deuxième paroi latérale (70b) du premier élément tubulaire (70), et une partie d'une charnière (94) munie d'un retrait étant fixée au-dessus de la portion d'extrémité.

8. Support (12, 16) selon l'une quelconque des revendications précédentes, dans lequel le premier élément tubulaire (22) s'étend de l'avant vers l'arrière et transmet une force sur ou depuis un couplage (14).

9. Support (12, 16) selon l'une quelconque des revendications précédentes, comprenant une paire de premiers éléments tubulaires (22, 70, 100) latéralement espacés s'étendant de l'avant vers l'arrière, avec un premier jeu d'ouvertures (52, 54, 56, 58) orientées latéralement et un deuxième jeu d'ouvertures (72, 74, 76, 78) orientées latéralement, et avec deux deuxièmes éléments tubulaires (32, 34, 36, 38), l'un des deuxièmes éléments tubulaires (32, 34, 36, 38) s'étendant à travers le premier jeu d'ouvertures et l'autre des deuxièmes éléments tubulaires (32, 34, 36, 38) s'étendant à travers un deuxième jeu d'ouvertures.

10. Support (12, 16) selon l'une quelconque des revendications précédentes, dans lequel la structure d'assemblage entre le premier élément tubulaire (22, 70, 100) et le deuxième élément tubulaire (32, 34, 36, 38, T) comprend un assemblage par soudage, notamment une soudure d'angle (60, 80).

11. Support (12, 16) selon l'une quelconque des revendications précédentes, dans lequel l'outil de travail présente des outils travaillant le sol et est conçu pour être tiré dans une direction de marche avant sur le sol.

12. Support (12, 16) selon la revendication 11, dans lequel les outils sont installés sur le premier élément tubulaire (22, 70, 100) et/ou le deuxième élément tubulaire (32, 34, 36, 38, T).

13. Support (12, 16) selon la revendication 12, dans lequel l'élément tubulaire (32, 34, 36, 38, T) sur lequel sont installés les outils s'étend transversalement à la direction de marche avant.

14. Support (12) selon l'une quelconque des revendications précédentes, comprenant des parties (10) gauche et droite séparées, chacune des parties présentant un élément d'extrémité (66) installé le plus à l'intérieur et s'étendant de préférence en direction de marche avant, et les éléments d'extrémité (66) étant reliés les uns aux autres pour obtenir un support principal.

15. Support (12) selon la revendication 14, dans lequel les parties (10) gauche et droite du support (12) sont pour l'essentiel inversées l'une par rapport à l'autre.

16. Support (12, 16) selon l'une quelconque des revendications précédentes, comprenant un élément tubulaire extérieur (70) dans la paroi latérale (70a) orientée vers l'intérieur duquel une ouverture (72, 74, 76, 78) est prévue pour recevoir les extrémités extérieures d'éléments tubulaires (32, 34, 36, 38, T) s'étendant dans le sens transversal.

17. Support (12, 16) selon l'une des revendications 6 à 16, dans lequel la charnière la charnière (94) est disposée sur la paroi latérale (70b) orientée vers l'extérieur du premier élément tubulaire (70), à proximité d'une extrémité extérieure d'un deuxième élément tubulaire (32, T) s'étendant dans le sens transversal, qui est fixé à la paroi latérale intérieure (70a) du premier élément tubulaire (70), notamment par soudage, de telle sorte que cette fixation confère une résistance au flambage à la paroi intérieure (70a) au niveau de la fixation de la charnière.

18. Support (12, 16) selon l'une quelconque des revendication précédentes, dans lequel le premier le premier élément tubulaire (22, 70, 100) comprend des surfaces inférieure et supérieure s'étendant pour l'essentiel dans des plans parallèles verticalement décalés l'un par rapport à l'autre, et le deuxième élément tubulaire (32, 34, 36, 38) orienté de préférence à l'angle droit de ceux-ci s'étend pour l'essentiel entre les plans décalés et constitue une construction de support compacte.
